# EUROPÄISCHE PATENTSCHRIFT

(11) **EP 1 959 136 B1**
(45) Veröffentlichungstag und Bekanntmachung des Hinweises auf die Patenterteilung: **19.08.2015**
(21) Anmeldenummer: 08001893.0
(22) Anmeldetag: 01.02.2008
(51) Int. Cl.: F03D 7/04, F03D 9/00, F03D 11/00, H02J 3/01

(54) **Windpark umfassend Windenergieanlagen mit zueinander verschobenem Schwenkwinkel**
Wind park including wind energy arrays with turn angle moved towards each other
Parc éolien comprenant des éoliennes dotées d'un angle de pivotement décalé l'un par rapport à l'autre

(30) Priorität: 01.02.2007 DE 102007005852
(43) Veröffentlichungstag der Anmeldung: 20.08.2008
(73) Patentinhaber: Senvion SE, 22297 Hamburg (DE)
(72) Erfinder: Letas, Heinz-Hermann, Dr., Gross Meinsdorf 23701 Süsel (DE); Matzen, Björn, 24855 Bollingstedt (DE)
(74) Vertreter: Glawe, Delfs, Moll

(56) Entgegenhaltungen:
- EP-A- 1 512 869
- WO-A-01/18937
- WO-A-03/007455
- DE-A1- 4 232 356
- US-A1- 2003 227 172

## Beschreibung

Die Erfindung betrifft einen Windpark mit mehreren Windenergieanlagen, die je einen Rotor und einen von diesem angetriebenen Generator zur Erzeugung elektrischer Energie aufweisen, und einer elektrischen Verbindung, über welche die von den Windenergieanlagen erzeugte elektrische Energie zu einem Netz-Anschlusspunkt geführt ist und welche ein Sammelnetz aufweist, an das die Windenergieanlagen über Turbinentransformatoren angeschlossen sind, wobei eine erste Gruppe der Windenergieanlagen eine verschwenkte Phase gegenüber mindestens einer anderen Gruppe aufweist.

Zur Gewährleistung einer hohen Versorgungssicherheit müssen Stromnetze strengen Anforderungen in Bezug auf Einhaltung gewisser elektrischer Parameter genügen. Ein wesentlicher Parameter der Netzqualität ist der Oberschwingungsgehalt. Einschlägige Regelungen begrenzen Amplitude und Ordnung der Oberschwingungen, um eine ausreichende Netzqualität zu erhalten. Moderne umrichtergesteuerte Windenergieanlagen erzeugen aufgrund der Schaltvorgänge im Umrichter Oberschwingungen in signifikantem Umfang. Sie werden im Rahmen einer für jeden Windenergieanlagentyp vorzunehmenden Typprüfung vermessen. Unter Anwendung entsprechender Vorschriften, wie zum Beispiel von Netzanschlussrichtlinien des Verbands der Elektrizitätswirtschaft VDEW, wird ein Anschlussfaktor bestimmt, der ein Maß für die Belastung mit Oberschwingungen ist. Der Anschlussfaktor gibt an, welche Kurzschlussleistung das Netz bezogen auf die Nennleistung der Windenergieanlage aufweisen muss. Sind mehrere Windenergieanlagen an das Netz anzuschließen, wie im Fall eines Windparks, so erhöht sich in ungünstigen Fällen die erforderliche Kurzschlussleistung linear mit der Anzahl der anzuschließenden Windenergieanlagen. In entlegenen Gebieten oder solchen mit schwacher Netzstruktur reicht die tatsächlich vorhandene Kurzschlussleistung häufig nicht aus, so dass die Anzahl der anzuschließenden Windenergieanlagen begrenzt werden muss.

Um eine solche Begrenzung hinsichtlich der Anzahl der anschließbaren Windenergieanlagen zu vermeiden, ist es bekannt, die Windenergieanlagen eines Parks über Transformatoren mit unterschiedlicher Windungsgeometrie so zusammenzuschalten, dass störende Oberschwingungen einander entgegenwirken (DE-C-42 32 356). So können die zum Anschluss der Windenergieanlagen an das parkeigene Sammelnetz vorgesehenen Mittelspannungstransformatoren bei bestimmten Windenergieanlagen des Windparks als sog. Dreieck-Transformatoren ausgebildet sein, während bei den übrigen Windenergieanlagen die Mittelspannungstransformatoren als Stern-Transformatoren ausgeführt sind (US-B-7 071 579). Durch die unterschiedlichen Transformatoreneigenschaften ergeben sich Phasenverschiebungen. Durch gezielte Auslegung der Transformatoren kann so erreicht werden, dass bestimmte Oberschwingungen aufgrund des Phasenunterschieds sich abschwächen bzw. einander kompensieren. Der Windpark als Ganzes verhält sich damit gegenüber dem Netz unter Oberschwingungsgesichtspunkten wie ein Windpark mit einer geringeren Anzahl von Windenergieanlagen, d. h. der Anschlussfaktor des Windparks als Ganzes verbessert sich.

Es können so auch größere Windparks an schwächere Netze angeschlossen werden. Ein Nachteil dieser Art der Oberschwingungskompensation ist aber, dass verschiedene Mittelspannungstransformatoren erforderlich werden. Das bedeutet zusätzlichen Aufwand bei der Errichtung des Windparks. Außerdem müssen die verschiedenen Mittelspannungstransformatoren genau auf die jeweiligen Anforderungen des Windparks und seiner Windenergieanlagen abgestimmt sein, wodurch Änderungen oder Ergänzungen des Windparks nur schwer erfolgen können.

Der Erfindung liegt die Aufgabe zugrunde, eine verbesserte Oberschwingungskompensation für Windparks der eingangs genannten Art anzugeben.

Die erfindungsgemäße Lösung liegt in den Merkmalen der unabhängigen Ansprüche. Vorteilhafte Weiterbildungen sind Gegenstand der abhängigen Ansprüche.

Bei einem Windpark mit mehreren Windenergieanlagen, die je einen Rotor und einen von diesem angetriebenen Generator zur Erzeugung elektrischer Energie aufweisen, und einer elektrischen Verbindung, über welche die von den Windenergieanlagen erzeugte elektrische Energie zu einem Netz-Anschlusspunkt geführt ist und welche ein Sammelnetz aufweist, an das die Windenergieanlagen über Turbinentransformatoren angeschlossen sind, wobei eine erste Gruppe der Windenergieanlagen eine verschwenkte Phase gegenüber mindestens einer anderen Gruppe aufweist, sind erfindungsgemäß die Merkmale im kennzeichen des Anspruchs 1 vorgesehen.

Die Erfindung beruht auf dem Gedanken, die Windenergieanlagen in Gruppen zu unterteilen und die Phasen dieser Gruppen mittels Schwenktransformatoren relativ zueinander um einen bestimmten Schwenkwinkel so zu verschwenken, dass eine als kritisch erkannte Oberschwingung möglichst kompensiert ist. Die Erfindung macht sich die Erkenntnis zu Nutze, dass bei mehreren Windenergieanlagen die Oberschwingungen nur innerhalb einer Gruppe addiert zu werden brauchen, während die Gruppen wiederum so verschaltet werden können, dass ihre Oberschwingungen einander abschwächen. Die Abschwächung kann zwar nicht über das gesamte Frequenzband erreicht werden, aber gemäß der Erfindung wird die Kompensation, genauer gesagt der Schwenkwinkel, so berechnet, dass die für den jeweiligen Windpark ungünstigste Oberschwingung so weit wie möglich kompensiert wird. Das für die Erreichung eines guten Anschlussverhaltens an das Netz wichtige Oberschwingungsverhalten kann damit gezielt optimiert werden. Damit kann bei an sich unveränderten Windenergieanlagen der effektive Gesamt-Anschlussfaktor des Windparks deutlich kleiner werden, als es an sich der Art und Anzahl der Windenergieanlagen des Windparks entspräche. Damit können bei gegebenen Netzanschlussbedingungen größere Windparks mit mehr (unveränderten) Windenergieanlagen vorgesehen sein. Da die Windenergieanlagen nicht verändert zu werden brauchen, sondern die Reduktion der Oberschwingung durch die erfindungsgemäße Verschaltung zu Gruppen unterschiedlicher Phase und Bestimmung des Schwenkwinkels gezielt auf die kritische Oberschwingung erreicht wird, ist kaum Zusatzaufwand erforderlich. Die Erfindung erreicht damit nicht nur eine kostengünstige Steigerung der an das Netz anschließbaren Leistung des Windparks, sondern eignet sich besonders auch zur Nachrüstung bestehender Windparks, beispielsweise im Rahmen von Erweiterungen zur Leistungserhöhung oder von verschärften Anschlussbedingungen seitens der Netzbetreiber. Gerade letzteres gewinnt zunehmend an Bedeutung. Mit einer gesonderten Ausführung der Schwenktransformatoren gestaltet sich die Nachrüstung besonders einfach und kostengünstig. Die Erfindung erreicht damit durch eine frappierend einfach erscheinende Maßnahme eine Vielzahl von Vorteile auf einmal, nämlich in Bezug auf gute Auslegbarkeit, geringerem Herstellaufwand, deutlich verbesserte Anpassbarkeit an veränderte Bedingungen im Windpark und beste Nachrüstfähigkeit.

Die Zahl der erforderlichen Schwenktransformatoren kann auf einen weniger als die Anzahl der Gruppen verringert sein und dennoch ein maximaler Kompensationseffekt erreicht sein. Zweckmäßigerweise sind alle Windenergieanlagen innerhalb einer Gruppe um einen gemeinsamen Winkel verschwenkt. Dann genügt ein einziger Schwenktransformator für die Gruppe, wobei eine Gruppe als sogenannte Nullgruppe nicht verschwenkt zu sein braucht. Besonders günstig ist es; bei drei oder mehr Gruppen zwei verschiedene Arten von Schwenktransformatoren mit jeweils gleichgroßen, entgegengerichteten Schwenkwinkeln vorzusehen.

Meist ist es angestrebt, mit einer möglichst geringen Anzahl an Gruppen auszukommen. Die Bestimmung des Schwenkwinkels hängt außer von der Ordnung der kritischen Oberschwingung, die es zu kompensieren gilt, von der Anzahl der Gruppen ab. Diese Wechselwirkung zwischen Anzahl der Gruppen und der Ordnung der zu kompensierenden Oberschwingung macht sich die Erfindung zu Nutze. Soll in einem einfachen Fall nur eine Oberschwingung als kritische Oberschwingung kompensiert werden, so ergibt sich der Schwenkwinkel aus 180 Grad geteilt durch die Ordnung dieser Oberschwingung. Soll beispielsweise die fünfte Harmonische reduziert werden, so bestimmt das Oberschwingungs-Kompensationsmodul aus der Ordnungsnummer der Harmonischen (hier 5) und der Anzahl der Gruppen (beispielsweise 2) einen optimalen Schwenkwinkel von 36 Grad. Sollen hingegen mehrere Oberschwingungen reduziert werden, so sieht die Erfindung mit Vorteil eine Optimierung vor. Bei dicht zusammen liegenden Oberschwingungen (wie beispielsweise der 5. und 7. Ordnung), wird für jede ein Einzelschwenkwinkel bestimmt und als optimaler Schwenkwinkel ein Wert zwischen den beiden Einzelschwenkwinkeln genommen. Bei nicht zusammen liegenden Oberschwingungen werden für jede Oberschwingung mehrere mögliche Einzelschwenkwinkel berechnet, und aus diesen die jeweils am dichtesten beieinander liegenden ausgewählt, um in dem entsprechenden Band die Oberschwingungen optimal zu kompensieren. Mit Vorteil ist dazu ein dem Parkmaster des Windparks zugeordnetes Oberschwingungs-Kompensationsmodul vorgesehen, in dem diese Verfahrensweise implementiert ist.

Für die Aufteilung in Gruppen ist es von Bedeutung, dass mit höherer Anzahl der Gruppen eine bessere und breitbandigere Kompensation erreicht werden kann. Eine Aufteilung auf zwei Gruppen ist der einfachste Fall und genügt, wenn eine Kompensation der kritischen Oberschwingung in Höhe von etwas der Hälfte genügt. Ist bei der kritischen Oberschwingung eine höhere Kompensation erforderlich, so muss die Anzahl der Gruppen entsprechend höher gewählt sein. Das erfordert zwar eine höhere Anzahl von Schwenktransformatoren, jedoch stört dies nicht, da erfindungsgemäß eine Nachrüstung ohne großen Aufwand ermöglicht ist. Es ist daher das Verdienst der Erfindung, die theoretisch erreichbare Verringerung der Oberschwingung praktisch einfach und ohne viel Aufwand realisierbar zu machen. Mit Vorteil sieht die Erfindung weiter vor, dass die Zuordnung der Windenergieanlagen zu den Gruppen dynamisch erfolgt. Dazu ist ein Schwenkbalancemodul vorgesehen.

Erfindungsgemäß ist vorgesehen, dass ein Windparkmaster mit einem Schwenkbalancemodul versehen ist, das dazu ausgebildet ist, Windenergieanlagen mit unterschiedlichem Schwenkwinkel zu- oder abzuschalten, um einen gewünschten Schwenkwinkel zu erreichen. Dabei ist zweckmäßigerweise eine Einstelleinrichtung für den gewünschten Schwenkwinkel vorgesehen. Damit kann insbesondere dem Fall Sorge getragen werden, dass nicht alle Windenergieanlagen des Windparks gleichmäßig elektrische Energie liefern. So können einige Windenergieanlagen ausgefallen sein. Fallen eine oder mehrere Windenergieanlagen in einer Gruppe aus, so wäre bei unverändertem Schwenkwinkel die Balance nicht mehr gegeben und die Oberschwingungskompensation wäre gestört. Ausfallen braucht nicht unbedingt einen mechanischen Defekt der Windenergieanlage zu bedeuten, sondern kann auch heißen, dass eine Windenergieanlage mangels passenden Winds nicht entsprechend herangezogen werden kann. Mit dem Schwenkbalancemodul wird erreicht, dass entsprechend Windenergieanlagen zugeschaltet oder welche in einer der anderen Gruppen abgeschaltet werden oder auf andere Weise, wie Änderung der Gruppenzahl, angepasst wird, so dass im Ergebnis wieder eine Kompensation erreicht wird. Gerade bei ausgedehnten Windparks mit unterschiedlichen Windbedingungen kann die praktische Nutzbarkeit solcher dynamische Gruppenzuordnung sehr hoch sein. Zudem wird die Ausfallsicherheit der erfindungsgemäß bewirkten Kompensation erhöht.

Unter Gruppe wird eine Teilmenge der Windenergieanlage des Windparks verstanden, die mindestens eine Windenergieanlage, aber nicht alle Windenergieanlagen umfasst. Unter einer anderen Gruppe wird eine weitere solche Teilmenge verstanden, wobei jede Windenergieanlage nur einer Gruppe zugehörig sein kann.

Unter gesondert wird vorliegend verstanden, dass der Schwenktransformator nicht zusammen mit dem Transformator verbaut ist, über den die Windenergieanlage an das parkeigene Sammelnetz angeschlossen ist. Üblicherweise ist dieses parkeigene Sammelnetz ein Mittelspannungsnetz, und der die Windenergieanlage damit verknüpfende Transformator ("turbine transformer") ist ein Mittelspannungstransformator.

Durch die gesonderte Ausführung wird die Verwendung speziell angepasster Mittelspannungstransformatoren überflüssig. Die Erfindung trennt die Funktion der Spannungsanhebung von der Funktion der Phasenverschiebung zur Oberwellenkompensation. Dies ermöglicht eine gezielte und kompromisslose Auslegung der Transformatoren auf ihren jeweiligen Zweck. Die Schwenktransformatoren können dank der Erfindung allein mit Blick auf die gewünschte Phasenverschiebung ausgelegt und hergestellt sein, ohne dass zusätzlich noch eine Spannungsübersetzung berücksichtigt zu werden braucht. Die Erfindung erreicht damit nicht nur eine Verbesserung des Oberschwingungsverhaltens und damit des Anschlussfaktors des Windparks, sondern verringert darüber hinaus auch noch den Aufwand. Denn dank der gesonderten Anordnung der Schwenktransformatoren ist es ermöglicht, herkömmlich ausgeführte Mittelspannungstransformatoren zu verwenden, die preisgünstig am Markt verfügbar sind. Trotz der auf den ersten Blick aufwendiger erscheinenden gesonderten Ausführung der Schwenktransformatoren erreicht die Erfindung so paradoxerweise eine Verringerung des Aufwands. Ein weiterer Vorteil der Erfindung liegt darin, dass mit der gesonderten Ausführung der Schwenktransformatoren Änderungen leicht durchzuführen sind, beispielsweise aufgrund von Veränderungen im Windpark aufgrund des Ersatzes vorhandener Windenergieanlagen durch solche mit anderer Leistung oder des Einsatzes zusätzlicher Windenergieanlagen.
Besonders zweckmäßig ist eine Ausführung des Schwenktransformators als Spartransformator. Darunter wird ein in Sparschaltung ausgeführter Transformator verstanden. Dies ermöglicht eine wesentliche Verringerung der Baugröße des Schwenktransformators. Der Installationsaufwand und die Herstellungskosten verringern sich entsprechend. Die Erfindung eröffnet so die Möglichkeit, auch bestehende und insbesondere kleinere Windenergieanlagen mit verhältnismäßig geringem Aufwand nachzurüsten. Dies ermöglicht es, die Vorteile einer gesonderten Ausführung des Schwenktransformators mit dem Vorteil von Spartransformatoren hinsichtlich wesentlich kleinerer Baugröße und kostengünstigeren Aufbaus zu verknüpfen. Dies ist im Stand der Technik ohne Vorbild.

Die erwähnte gesonderte Anordnung des Schwenktransformators bezieht sich also auf den Transformator, über den die jeweilige Windenergieanlage ihre elektrische Energie abgibt. Der Schwenktransformator kann, braucht aber nicht, gesondert von der Windenergieanlage angeordnet sein, auf die er wirkt. Es ist sogar zweckmäßig, wenn der Schwenktransformator in die jeweilige Windenergieanlage integriert angeordnet ist. Er kann als Modul ausgeführt sein, das je nach Bedarf in einer Windenergieanlage vorgesehen ist oder nicht. Gegebenenfalls kann aber auch vorgesehen sein, den Schwenktransformator in den Umrichter der jeweiligen Windenergieanlage zu integrieren. Die integrierte Anordnung hat weiter den Vorteil, dass sie eine Nachrüstung von Windenergieanlage vereinfacht, da keine Änderungen an der Parktopologie und seinem Sammelnetz mitsamt dessen (Mittelspannungs-)Transformato-ren erforderlich werden. Anders als die aus dem Stand der Technik bekannten Methoden eignet sich die Erfindung daher besonders zur Nachrüstung vorhandener Windenergieanlagen und Windparks.

Es ist aber nicht zwingend, dass der erfindungsgemäße Schwenktransformator in die Windenergieanlage integriert ist. Er kann auch als eigene gesonderte Einheit im Sammelnetz des Windparks angeordnet sein. Eine solche Anordnung bietet insbesondere dann Vorteile, wenn eine Gruppe von Windenergieanlagen innerhalb des Windparks über eine eigene (Stich-)Leitung an das Sammelnetz angeschlossen ist. Auch hierbei kann mit Vorteil der Schwenktransformator als Spartransformator ausgeführt sein.

Schließlich kann auch vorgesehen sein, den Schwenktransformator in einen Hochspannungstransformator, wie er zum Anschluss an das Versorgungsnetz verwendet wird, zu integrieren. Um die gewünschte Kompensationswirkung zu erzielen, weist der Hochspannungstransformator hierzu zweckmäßigerweise mehrere Anschlüsse an die Mittelspannungswicklung auf, oder es sind mehrere Hochspannungstransformatoren vorgesehen, an die jeweils ein Teil der Windenergieanlagen des Windparks angeschlossen ist. Eine solche Anordnung bietet den Vorteil, dass nur wenige (im Grenzfall ein) Schwenktransformatoren benötigt werden. Der Aufwand für die Oberschwingungskompensation ist so minimiert.

Der Schwenktransformator kann einfach ausgeführt sein, vorzugsweise in der bereits erwähnten Sparschaltung. Dies verringert nicht nur den schaltungstechnischen Aufwand und damit die Kosten, sondern minimiert auch den erforderlichen Bauraum (insbesondere in Bezug auf die im Stand der Technik vorgesehenen Isoliertransformatoren). Es kann aber zweckmäßig sein, den Schwenktransformator mit zwei oder mehr Anzapfungen zu versehen. Damit kann auf einfache Weise eine Veränderung des Schwenkwinkels erreicht werden, beispielsweise zwischen +15 und -15 sowie +30 Grad. Mit einer Bauform können so unterschiedliche Anforderungen an den Schwenkwinkel abgedeckt werden. Damit kann bei geringem Aufwand eine nahezu universelle Einsetzbarkeit bzw. Anpassbarkeit erreicht werden.

Die Erfindung bezieht sich weiter auf ein Verfahren zum Anschließen von Windenergieanlagen, mit den Merkmalen des Anspruchs 15. Zur näheren Beschreibung des Verfahrens wird auf vorstehende Erläuterungen verwiesen.
Die Erfindung wird nachfolgend anhand vorteilhafter Ausführungsbeispiele unter Bezug auf die beigefügte Zeichnung erläutert. Es zeigen:
- Fig. 1: eine Übersichtsdarstellung eines Windparks gemäß der Erfindung;
- Fig. 2: eine schematische Darstellung einer Windenergiean- lage mit einem Schwenktransformator;
- Fig. 3: Beispiele für Schaltungsvarianten des Schwenk-transformators;
- Fig. 4: eine Detaildarstellung zu Fig. 3;
- Fig. 5 bis 7: weitere Ausführungsvarianten der Erfindung; und
- Fig. 8: eine alternative Schaltvariante des Schwenktrans- formators;
- Fig. 9: ein weiteres Ausführungsbeispiel des Schwenktrans-formators; und
- Fig. 10: Oberschwingungs-Diagramme.

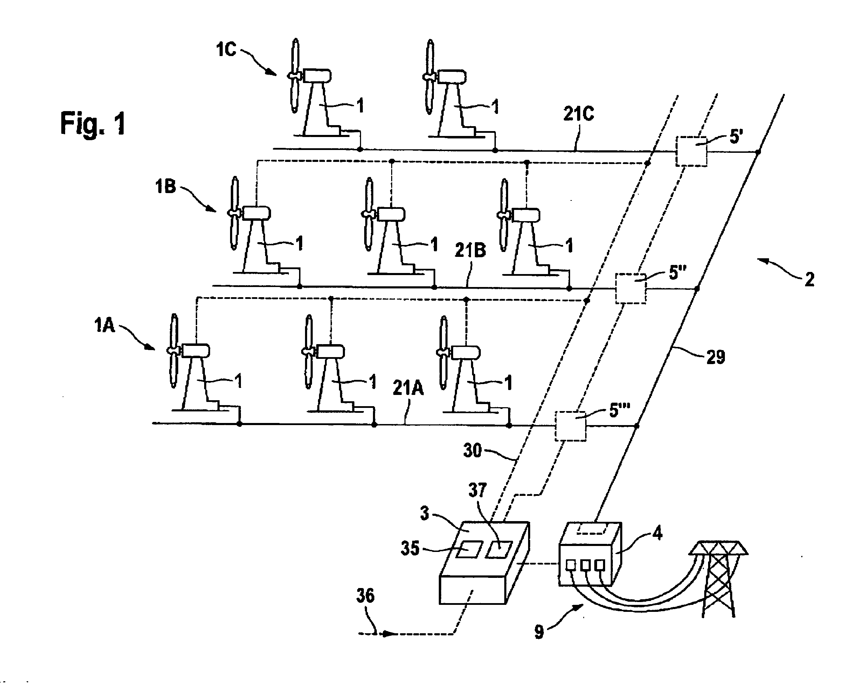

Ein Ausführungsbeispiel für einen gemäß der Erfindung ausgeführten Windpark ist in Fig. 1 dargestellt. Der Windpark umfasst eine Mehrzahl von Windenergieanlagen 1, die in Gruppen angeordnet sind. Die Windenergieanlagen 1 sind an ein Sammelnetz 2 angeschlossen, das als eine Mittelspannungsschiene 29 mit mehreren Stichleitungen 21A, 21B, 21C ausgeführt ist. An jeder Stichleitung 21A-C ist eine Gruppe der Windenergieanlagen 1 angeschlossen. Die Mittelspannungsschiene 29 ist eine Unterspannungsseite eines Hochspannungstransformators 4 angeschlossen, dessen Oberspannungsseite über einen Anschlusspunkt 9 mit dem Hochspannungsnetz verbunden ist.

Weiter ist ein Windpark-Master 3 vorgesehen, welcher eine übergeordnete Regelung für die Windenergieanlage 1 des Windparks ausübt. Der Windpark-Master 3 ist über ein gesondertes Signalleitungsnetz 30 (nur teilweise dargestellt) mit den Komponenten des Windparks verbunden.

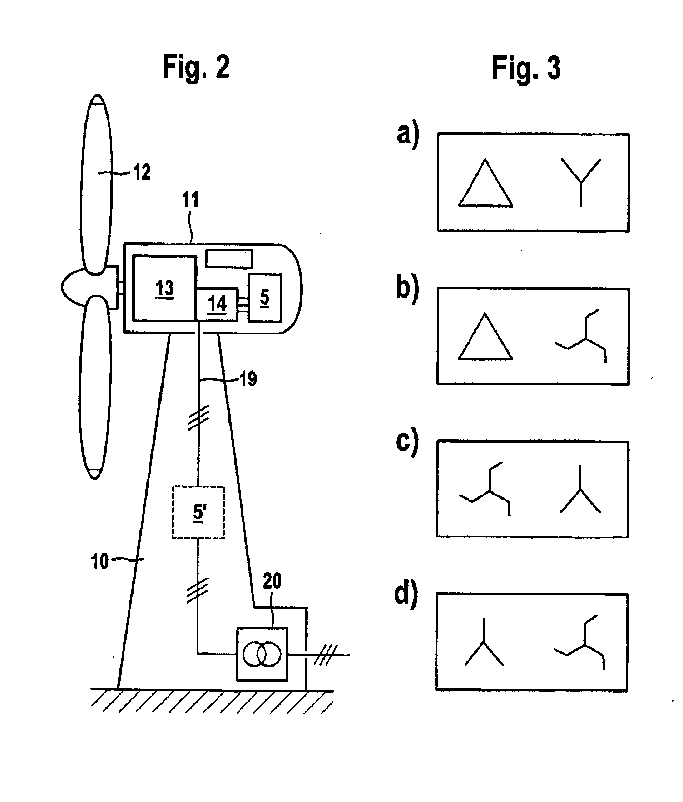

Der Aufbau der Windenergieanlagen 1 des Windparks ist beispielhaft in Fig. 2 dargestellt. Auf einem Turm 10 ist ein in Azimutebene schwenkbares Maschinenhaus 11 angeordnet, welches die wesentlichen elektrischen Komponenten der Windenergieanlage aufnimmt. An dessen vorderer Stirnseite ist ein Windrotor 12 drehbar angeordnet. Er treibt über eine Rotorwelle (nicht dargestellt) einen Generator 13 an. Der Generator 13 kann als Synchron- oder Asynchron-Generator ausgeführt sein; vorzugsweise handelt es sich um einen doppelt gespeisten Asynchron-Generator. Er ist mit seinem Stator (nicht dargestellt) unmittelbar mit Anschlussleitungen 19 verbunden. Ein Rotor (nicht dargestellt) des Generators 13 ist an einen Umrichter 14 angeschlossen, der wiederum ebenfalls mit den Anschlussleitungen 19 verbunden ist. Die Anschlussleitungen 19 führen zu einem im Fuß des Turms 10 angeordneten Mittelspannungstransformator 20, der die von der Windenergieanlage gelieferte elektrische Leistung von einer Spannung von etwa 700 Volt auf ein Mittelspannungsniveau von ca. 20 kV anhebt und in die Stichleitung 21A-C des Sammelnetzes 2 einspeist.

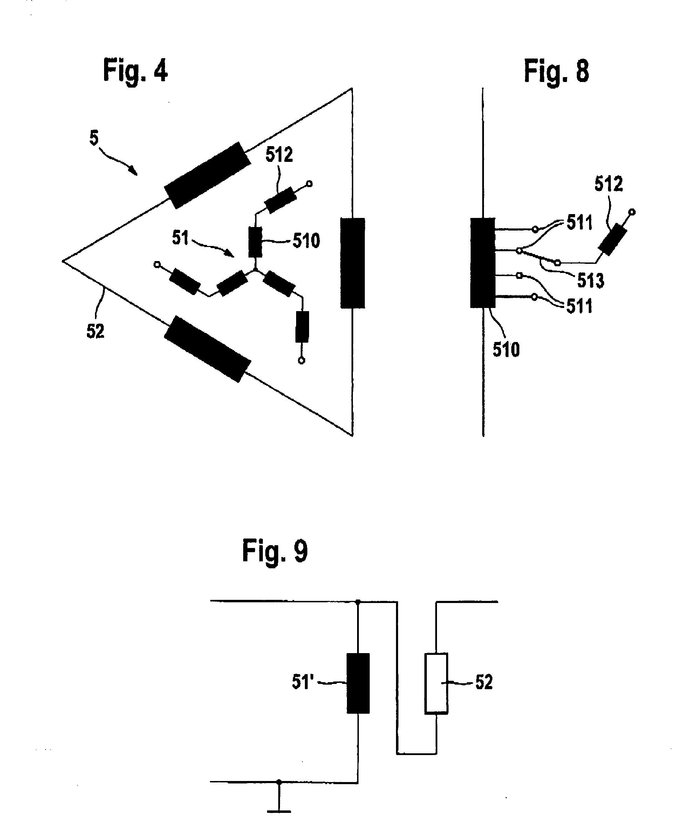

Weiter ist ein Schwenktransformator 5 vorgesehen. Vorzugsweise ist er, wie in Fig. 2 dargestellt, im Maschinenhaus 11 der Windenergieanlage 1 angeordnet. Dies ermöglicht eine Anschaltung des Schwenktransformators 15 unmittelbar folgend auf den Umrichter 14. Es soll aber nicht ausgeschlossen sein, den Schwenktransformator 5' in der Anschlussleitung 19 anzuordnen. Weiter kann alternativ oder zusätzlich vorgesehen sein, Schwenktransformatoren 5" auf Mittelspannungsebene im Sammelnetz 2 anzuordnen, und zwar vorzugsweise an den Stichleitungen 21A-C. Zweckmäßig ist eine Ausführung der Schwenktransformatoren 5 als Spartransformator. Fig. 9 zeigt exemplarisch ein einphasiges Ersatzschaltbild für einen Spartransformator. Bei der dort dargestellten Sparschaltung ist die Primärwicklung 51' so geschaltet, dass sie galvanisch mit der Sekundärwicklung 52 verbunden ist. Die Primärwicklung 51' wird so für die Sekundärseite mitgenutzt.

Elektrische Ersatzschaltbilder für verschiedene mögliche Ausführungsformen der Schwenktransformatoren 5 sind beispielhaft in Fig. 3 dargestellt. Aus Gründen leichterer Verständlichkeit sind die elektrischen Ersatzschaltbilder für Isoliertransformatoren dargestellt; sie gelten analog auch für die bevorzugte Ausführung als Spartransformator. Ein charakteristisches Element der Schwenktransformatoren ist, dass Primär- und Sekundärwicklung eine unterschiedliche Phasenverzögerung bewirken. Im einfachsten Fall kann dies dadurch realisiert sind, dass der Schwenktransformator in Stern-Dreieck-Schaltung ausgeführt ist (siehe Fig. 3a). Die Phasenverschwenkung ergibt sich hier fix aus dem Geometrieunterschied. Um den Grad der Phasenverschwenkung bestimmen zu können, ist eine Ausführung mit einer sog. Zickzack-Wicklung von Vorteil, die beispielsweise mit einer Dreieck-Wicklung zusammenwirkt (Zickzack-Dreieck-Schaltung; siehe Fig. 3b). Dies wird in Bezug auf Fig. 4 später näher erläutert. Alternativ kann der Schwenktransformator 5 auch in Zickzack-Stern-Schaltung (siehe Fig. 3c) oder Stern-Zickzack-Schaltung (siehe Fig. 3d) ausgeführt sein.

Ein elektrisches Ersatzschaltbild für eine Ausführung des Schwenktransformators 5 in Zickzack-Dreieck-Schaltung ist in Fig. 4 dargestellt. Der Schwenktransformator 5 umfasst eine Primärwicklung 51 und eine Sekundärwicklung 52. Letztere ist in herkömmlicher Dreieckschaltung ausgeführt und braucht nicht weiter erläutert zu werden. Die Primärwicklung 51 ist in Zickzack-Schaltung ausgeführt. Sie umfasst so viele Zweige wie Phasen vorhanden sind. Jeder Zweig umfasst eine Arbeitswicklung 510 und eine Schwenkwicklung 512. Letztere weist eine von der Arbeitswicklung 510 abweichende elektrische Achse auf.

Diese bestimmt zusammen mit dem Verhältnis der Induktivitäten zwischen Arbeitswicklung 510 und Schwenkwicklung 512 den Grad der Phasenverschwenkung.

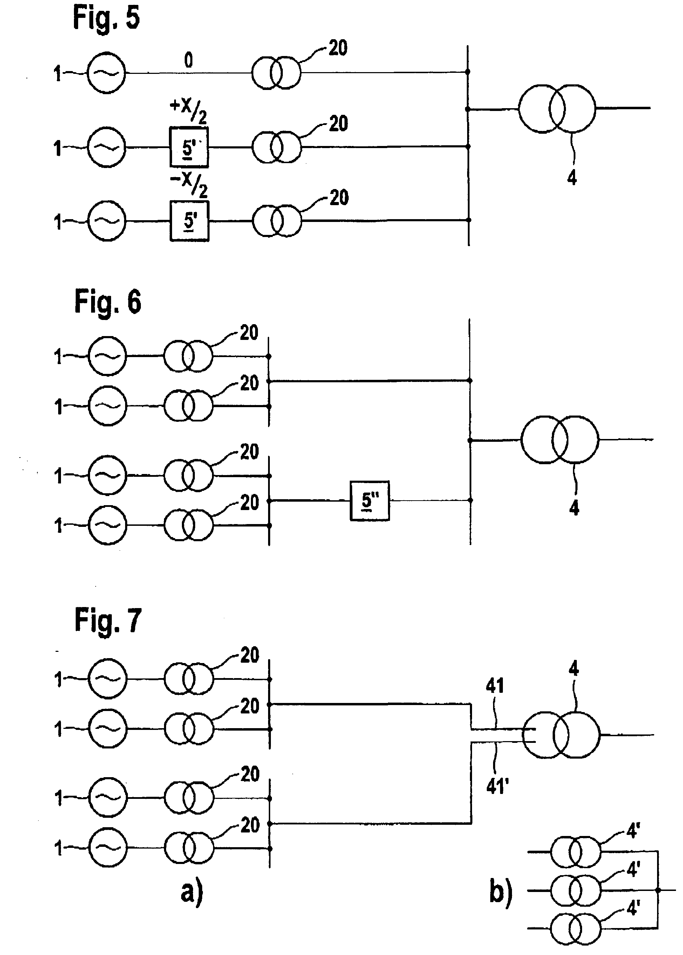

Die in Fig. 2 dargestellte Anordnung des Schwenktransformators 5 an der Windenergieanlage 1 selbst ist eine vorteilhafte Ausführungsmöglichkeit, die sich insbesondere für die Nach- oder Umrüstung gut eignet. Jedoch kommen auch andere Möglichkeiten für die Anordnung des Schwenktransformators 5 in Betracht. Beispiele hierfür sind in Fig. 5 bis 8 dargestellt. Es kann vorgesehen sein, einen oder mehrere (im dargestellten Beispiel zwei) Schwenktransformatoren 5' als gesonderte Einheiten im bzw. am Turm 10 der Windenergieanlagen 1 anzuordnen. Besonders vorteilhaft ist eine Aufteilung der Windenergieanlagen 1 in drei Gruppen, wobei eine erste Gruppe um einen halben Ziel-Schwenkwinkel +X/2 (mittlerer Zweig in Fig. 5), eine zweite Gruppe um einen halben negativen Ziel-Schwenkwinkel -X/2 (unterer Zweig) und eine dritte Gruppe um einen Nullwinkel (oberer Zweig) verschwenkt wird. Es versteht sich, dass für einen Nullwinkel der Schwenktransformator entfallen kann. Eine solche Aufteilung bietet den Vorteil, dass auch bei Ausfall oder Abschaltung einer Gruppe die Phasenverschwenkung zumindest in eingeschränktem Umfang fortgeführt wird, so dass die angestrebte Oberwellenkompensation zumindest noch teilweise erreicht wird. Eine solche Aufteilung in Gruppen erhöht damit die Betriebssicherheit des Windparks. Sie ist selbstverständlich nicht auf die Anordnung der Schwenktransformatoren 5' an der Windenergieanlage 1 selbst beschränkt, sondern kann genauso gut bei anderer Anordnung der Schwenktransformatoren 5 (wie im Sammelnetz 2 oder am Hochspannungstransformator 4) vorgesehen sein.

Es kann auch vorgesehen sein, die Schwenktransformatoren 5" am Sammelnetz 2 anzuordnen (siehe Fig. 6). Sie sind dazu zweckmäßigerweise im Bereich des Übergangs zwischen den Stichleitungen 21A-C und der Sammelschiene 29 geschaltet. Eine solche Anschaltung eignet sich ebenfalls gut für eine Aufteilung in Gruppen und gruppenweise verschiedene Schwenkwinkel. Ebenfalls besteht die Möglichkeit, den Schwenktransformator 5''' in den Hochspannungstransformator 4 zu integrieren (siehe Fig. 7). Es versteht sich, dass für eine gegenseitige Verschwenkung der Hochspannungstransformator 4 hierzu mit zwei oder mehr (zueinander verschwenkten) Primärwicklungsanschlüssen 41, 41' versehen sein muss (Fig. 7a). Es kann aber auch vorgesehen sein, anstatt einem Hochspannungstransformator 4 mehrere kleinere 4' vorzusehen, die jeweils einer Gruppe von Windenergieanlagen 1 zugeordnet sind (Fig. 7b). Letzteres bietet den Vorteil, dass handelsübliche Komponenten verwendet werden können und weiter eine höhere Betriebssicherheit, da bei Ausfall eines der Hochspannungstransformatoren zumindest ein teilweiser Weiterbetrieb über die übrigen Hochspannungstransformatoren ermöglicht ist.

Weitere Schaltungsvarianten für den Schwenktransformator 5 sind in den Fig. 8 und 9 dargestellt. Bei der in Fig. 8 dargestellten Variante sind mehrere Anzapfungen 511 an der Arbeitswicklung 510 vorgesehen, an welche die Schwenkwicklung 512 wahlweise angeordnet werden kann. Damit kann je nach Wahl der Anzapfung 511 ein unterschiedlicher Schwenkwinkel eingestellt werden. Mit einem solchen Schwenktransformator kann eine gute Anpassbarkeit der Windenergieanlage 1 bzw. der Windparks erreicht werden. Es kann für alle Windenergieanlagen 1 derselbe Schwenktransformator vorgesehen sein, der bei der Inbetriebnahme nur noch entsprechend dem gewünschten Schwenkwinkel verschaltet zu werden braucht. Diese Variante eignet sich besonders für Nach- oder Umrüstung. Es kann optional weiter vorgesehen sein, die Schwenkwicklung 512 über eine Umschalteinrichtung 513 an die Anzapfungen 511 anzuschließen. Ist die Umschalteinrichtung in an sich bekannter (und daher nicht dargestellter) Weise lastschaltbar ausgeführt, kann so im laufenden Betrieb eines Windparks der Schwenkwinkel verändert werden. Damit wird die Möglichkeit eröffnet, einen Ausfall von Windenergieanlagen 1 durch entsprechende Veränderung des Schwenkwinkels zu kompensieren.

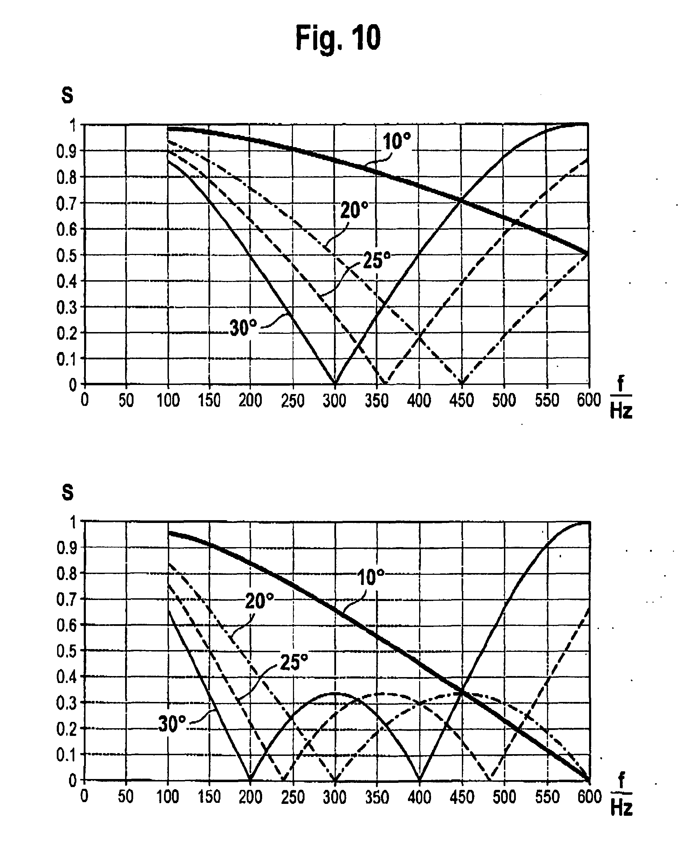

Die Wirksamkeit der Erfindung ist in Fig. 10 veranschaulicht. Es zeigt die normierte Leistungsdichte S der Oberschwingungen, die am Anschlusspunkt in ein 50Hz-Versorgungsnetz 9 abgegeben werden. In Fig. 10a sind zwei Gruppen gebildet, die jeweils um 10, 20, 25 oder 30 Grad relativ zueinander verschwenkt sind. In Fig. 10b sind drei Gruppen gebildet, wobei als Schwenkwinkel wieder 10, 20, 25 oder 30 Grad eingestellt sind (vgl. obige Erläuterungen zu Fig. 5). Man erkennt, dass mit steigender Gruppenzahl eine breitbandigere Oberschwingungskompensation gelingt.

Der Windparkmaster 3 ist mit einem Schwenkbalancemodul 35 und einem Oberschwingungs-Kompensationsmodul 37 versehen. Ersteres ist dazu ausgebildet, einen vorgegebenen Schwenkwinkel auch dann zu halten, wenn nicht alle Windenergieanlagen 1 in Betrieb sind oder aus anderen Gründen Unsymmetrien zwischen den Gruppen 1A-C auftreten. Fallen beispielsweise in Gruppe 1A eine oder mehrere Windenergieanlagen aus, so würde sich bei einer Ausführung gemäß Fig. 5 der Schwenkwinkel zur zweiten Gruppe 1B hin verschieben. Die Kompensation der Oberschwingungen wäre dadurch beeinträchtigt. Das Schwenkbalancemodul überwacht mittels eines Monitors den Betriebszustand der Windenergieanlagen 1, und nimmt bei erkanntem Ausfall erforderlichenfalls Windenergieanlagen in einer anderen Gruppe (im Beispiel aus Gruppe 1B) vom Netz bzw. verringert deren Leistung. Damit bleibt die Balance zwischen den verschiedenen Gruppen 1A-C gewahrt. Zur Einstellung des vorgegebenen Schwenkwinkels kann ein Signaleingang 36 vorgesehen sein.

Das Oberschwingungs-Kompensationsmodul 37 ist dazu ausgebildet, anhand von zu kompensierenden Oberschwingungen den Schwenkwinkel zu bestimmen und durch Zusammenwirken mit dem Schwenkbalancemodul 35 und/oder Umschalteinrichtungen 513 der Schwenktransformatoren 5 einzustellen. So kann vorgegeben werden, dass die dritte und die siebte Oberschwingungen zu kompensieren sind. Mittels an sich bekannter Rechenvorschriften ermittelt das Oberschwingungs-Kompensationsmodul 37, dass mit einer Aufteilung der Windenergieanlagen 1 in drei Gruppen bei einem Schwenkwinkel von 30 Grad eine optimale Kompensation erreicht werden kann. Das Oberschwingungs-Kompensationsmodul 37 wirkt mit den Schwenktransformatoren 5 so zusammen, dass sie je nach Gruppe auf +15 Grad, -15 Grad bzw. 0 Grad eingestellt werden. Damit wird die gewünschte Kompensation ohne weiteres Zutun erreicht.

Das Oberschwingungs-Kompensationsmodul berechnet den optimalen Schwenkwinkel bei einer kritischen Oberschwingung bei zwei Gruppen einfach aus einer Division von 180 Grad durch die Ordnung der kritischen Oberschwingung. Bei mehreren dicht beieinander liegenden kritischen Oberschwingungen wird für jede ein Einzelschwenkwinkel berechnet. Handelt es sich beispielsweise um die 5. und 7. Ordnung der Oberschwingung, ergeben sich bei zwei Gruppen Einzelschwenkwinkel von 36 bzw. 25,7 Grad, woraus ein Zwischenoptimum von etwa 30 Grad gewählt wird. Liegen die kritischen Oberschwingungen nicht dicht beieinander, werden jeweils mehrere Einzelschwenkwinkel berechnet, also 36 Grad, 108 Grad, usw. für die 5. Ordnung und 16,4 Grad, 49,1 Grad usw. für eine 11. Ordnung. Am dichtesten beieinander liegen die Einzelschwenkwinkel 36 Grad und 49,1 Grad für die 5. bzw. 11. Ordnung, weshalb das Optimum in diesem Bereich gewählt werden kann (mehr am unteren Ende bei stärkerer Dampfung der 5. Ordnung und mehr am oberen Ende bei gewünschter stärkerer Dämpfung der 11. Ordnung).

Die Anzahl der Gruppen wird in Zusammenwirkung mit dem Schwenkbalancemodul bestimmt. Sind beispielsweise 30 Windenergieanlagen umfasst, so kann bei zwei Gruppen eine Kompensation der 5. und 7. Ordnung um insgesamt 75 % erreicht werden. Fällt jedoch eine Gruppe aus, so ergibt sich nur eine Reduktion um 50 %. Aus Vorsichtsgründen muss daher letzterer Wert für die Berechnung des Anschlussfaktors herangezogen werden. Die Optimierungsrechnung wird von den Modulen fortgeführt für drei Gruppen. Sind alle Gruppen aktiv, ergibt sich für die 5. Ordnung eine Kompensation um 78 % und für die 7. Ordnung sogar um 82 %. Allerdings sind noch verschiedene Szenarien für Gruppenausfälle zu berücksichtigen. Fällt eine Gruppe aus, ergibt sich dabei für die 5. Ordnung eine deutlich schlechtere Kompensation um nur noch etwa 57 %, während für die 7. Ordnung noch knapp 77 % kompensiert werden. Fallen allerdings zwei Gruppen aus, so dass nur noch eine aktiv ist, ergibt sich eine Reduktion um 67 %. Die Optimierungsrechnung ergibt also, dass bei drei Gruppen im ungünstigsten Fall mit einer Kompensation von 57 % gerechnet werden muss, während für zwei Gruppen sich 50 % ergeben. Der Gewinn durch die Bildung einer dritten Gruppe ist daher nur gering und rechtfertigt den zusätzlichen Aufwand nicht. Die Optimierungsrechnung kann aber ein anderes Ergebnis erbringen, wenn die 7. Ordnung die deutlich kritischere Oberschwingung im Vergleich zu der 5. Ordnung ist, da bei drei Gruppen eine Reduktion um 67 % stets erreicht werden kann, werden bei zwei Gruppen es nur 50 % sind. In diesem Fall kann sich eine Bildung von drei Gruppen lohnen. Man sieht an diesem Beispiel, dass das Bestimmen des Schwenkwinkels und die Aufteilung in Gruppen in einer Wechselwirkung zueinander stehen, welche sich die Erfindung zu Nutze macht.

## Patentansprüche

1. Windpark mit mehreren Windenergieanlagen (1), die je einen Rotor (12), einen von diesem angetriebenen Generator (13) zur Erzeugung elektrischer Energie aufweisen, und einer elektrischen Verbindung, über welche die von den Windenergieanlagen (1) erzeugte elektrische Energie zu einem Netz-Anschlusspunkt (9) geführt ist und welche ein Sammelnetz (2) aufweist, an das die Windenergieanlagen (1) über Turbinentransformatoren (20) angeschlossen sind, wobei eine erste Gruppe (1A) der Windenergieanlagen (1) eine verschwenkte Phase gegenüber mindestens einer anderen Gruppe (1B) aufweist,
**dadurch gekennzeichnet, dass**
die elektrische Verbindung für die erste Gruppe (1A) mindestens einen gesonderten Schwenktransformator (5) umfasst, der die verschwenkte Phase zu der anderen Gruppe (1B) um einen gewünschten Schwenkwinkel bewirkt, und die Windenergieanlagen (1) so auf die Gruppen (1A, 1B) aufgeteilt sind und der gesonderte Schwenktransformator (5) so ausgebildet ist, dass die verschwenkte Phase der ersten Gruppe (1A) kompensierend ist in Bezug auf eine vorgebbare kritische Oberschwingung, wobei ein Schwenkbalancemodul (35) dazu ausgebildet ist, die Windenergieanlagen (l) mit unterschiedlichem Schwenkwinkel zu- oder abzuschalten oder die Gruppenzahl zu ändern, um den gewünschten Schwenkwinkel zu erreichen.

2. Windpark nach Anspruch 1,
**dadurch gekennzeichnet, dass**
eine Einstelleinrichtung für den gewünschten Schwenkwinkel vorgesehen ist.

3. Windpark nach Anspruch 1 oder 2,
**dadurch gekennzeichnet, dass**
ein Oberschwingungs-Kompensationsmodul (37) vorgesehen ist, das dazu ausgebildet ist, den Schwenkwinkel abhängig von der Ordnung der kritischen Oberschwingung zu bestimmen.

4. Windpark nach Anspruch 3,
**dadurch gekennzeichnet, dass**
das Oberschwingungs-Kompensationsmodul (37) weiter dazu ausgebildet ist, eine Optimierungsberechnung bei mehreren kritischen Oberschwingungen durchzuführen.

5. Windpark nach Anspruch 3 oder 4,
**dadurch gekennzeichnet, dass**
das Schwenkbalancemodul und das Oberschwingungs-Kompensaticnsmodul (37) in der Weise zusammenwirken, dass die Anzahl der zu bildenden Gruppen (1A, 1B) in Abhängigkeit von dem bestimmten Schwenkwinkel, Ausfällen der einzelnen Windenergieanlage (1) und/oder Auslastung der einzelnen Windenergieanlagen (1) bestimmt ist.

6. Windpark nach einem der vorangehenden Ansprüche,
**dadurch gekennzeichnet, dass**
der Schwenktransformator (5) als Spartransformator ausgeführt ist.

7. Windpark nach einem der vorangehenden Ansprüche,
**dadurch gekennzeichnet, dass**
der Schwenktransformator (5) in die jeweilige Windenergieanlage (1) integriert angeordnet ist.

8. Windpark nach Anspruch 7,
**dadurch gekennzeichnet, dass**
der Schwenktransformator (5) in den Umrichter (14) der jeweiligen Windenergieanlage (1) integriert ist.

9. Windpark nach einem der vorhergehenden Ansprüche,
**dadurch gekennzeichnet, dass**
der Schwenktransformator (5') als eigene Einheit im Sammelnetz (2) des Windparks angeordnet ist.

10. Windpark nach einem der vorhergehenden Ansprüche,
**dadurch gekennzeichnet, dass**
der Schwenktransformator (5") in einen Hochspannungstransformator (4) integriert ist.

11. Windpark nach Anspruch 10,
**dadurch gekennzeichnet, dass**
der Hochspannungstransformator (4) zwei oder mehr Primärwicklungsanschlüsse (41, 41') aufweist, an die jeweils eine Gruppe (1A, 1B) der Windenergieanlagen (1) des Windparks angeschlossen ist.

12. Windpark nach einem der vorhergehenden Ansprüche,
**dadurch gekennzeichnet, dass**
der Schwenktransformator (5) zwei oder mehr Anzapfungen (511) für verschiedene Schwenkwinkel aufweist.

13. Windpark nach einem der vorhergehenden Ansprüche,
**dadurch gekennzeichnet, dass**
jede Gruppe (1A, 1B) an eine eigene Leitung (21A, 21B) angeschlossen ist.

14. Windpark nach einem der vorhergehenden Ansprüche,
**dadurch gekennzeichnet, dass**
zwei verschiedene Schwenktransformatoren (5) mit jeweils gleichgroßen, entgegengerichteten Schwenkwinkeln vorgesehen sind.

15. Verfahren zum Anschließen von Windenergieanlagen (1), die je einen Rotor (12), einen von diesem angetriebenen Generator (13) zur Erzeugung elektrischer Energie aufweisen, über Turbinentransformatoren (20) an ein Sammelnetz (2),
mit den Schritten
- Identifizieren einer kritischen Oberschwingung,
- Aufteilen der Windenergieanlagen (1) in Gruppen (1A, 1B),
- Bestimmen eines Schwenkwinkels für eine der Gruppen (1A) derart, dass durch die verschiedenen Phasen der Gruppen (1A, 1B) eine gezielte Kompensation der kritischen Oberschwingung zwischen den Gruppen (1A, 1B) erfolgt, und
- Erzeugen des Schwenkwinkels in der Gruppe (1A),
wobei die Windenergieanlagen (1) mit unterschiedlichen Schwenkwinkeln zu- oder abgeschaltet oder die Gruppenzahl geändert werden, um den gewünschten Schwenkwinkel zu erreichen.

16. Verfahren nach Anspruch 15,
**gekennzeichnet durch**
Bestimmen des Schwenkwinkels in Abhängigkeit von der Anzahl der Gruppen (1A, 1B).

17. Verfahren nach Anspruch 15 oder 16,
**gekennzeichnet durch**
Durchführen der Berechnung für Einzelschwenkwinkel bei mehreren kritischen Oberschwingungen und einer Optimierungsrechnung zur Bestimmung des Schwenkwinkels.

18. Verfahren nach einem der Ansprüche 15 bis 17,
**gekennzeichnet durch**
Bestimmen der Anzahl der zu bildenden Gruppen (1A, 1B) in Abhängigkeit von dem bestimmten Schwenkwinkel, Ausfällen der einzelnen Windenergieanlage (1) und/oder Auslastung der einzelnen Windenergieanlagen (1).

## Claims

1. Wind farm having a plurality of wind energy installations (1), which each have a rotor (12) and a generator (13), driven thereby, for generating electric power, and an electrical connection that is used to route the electrical power generated by the wind energy installations (1) to a system connection point (9) and that has a busbar system (2) to which the wind energy installations (1) are connected via turbine transformers (20), wherein a first group (1A) of the wind energy installations (1) has a swivelled phase in comparison with at least one other group (1B),
**characterized in that**
the electrical connection for the first group (1A) comprises at least one separate swivel transformer (5) that brings about the swivelled phase by a desired swivel angle in relation to the other group (1B), and the wind energy installations (1) are split over the groups (1A, 1B) in such a manner, and the separate swivel transformer (5) is designed in such a manner, that the swivelled phase of the first group (1A) is compensatory in relation to a prescribable critical harmonic, wherein a swivel balance module (35) is designed to connect or disconnect the wind energy installations (1) with a different swivel angle or to change the number of groups in order to achieve the desired swivel angle.

2. Wind farm according to Claim 1,
**characterized in that**
an adjusting device is provided for the desired swivel angle.

3. Wind farm according to Claim 1 or 2,
**characterized in that**
a harmonic compensation module (37) is provided that is designed to determine the swivel angle on the basis of the order of the critical harmonic.

4. Wind farm according to Claim 3,
**characterized in that**
the harmonic compensation module (37) is additionally designed to perform an optimization calculation for a plurality of critical harmonics.

5. Wind farm according to Claim 3 or 4,
**characterized in that**
the swivel balance module and the harmonic compensation module (37) interact such that the number of groups (1A, 1B) to be formed is determined on the basis of the determined swivel angle, failures in the individual wind energy installations (1) and/or utilization level of the individual wind energy installations (1).

6. Wind farm according to one of the preceding claims,
**characterized in that**
the swivel transformer (5) is embodied as an auto-transformer.

7. Wind farm according to one of the preceding claims,
**characterized in that**
the swivel transformer (5) is arranged so as to be integrated in the respective wind energy installation (1).

8. Wind farm according to Claim 7,
**characterized in that**
the swivel transformer (5) is integrated in the converter (14) of the respective wind energy installation (1).

9. Wind farm according to one of the preceding claims,
**characterized in that**
the swivel transformer (5') is arranged as a separate unit in the busbar system (2) of the wind farm.

10. Wind farm according to one of the preceding claims,
**characterized in that**
the swivel transformer (5") is integrated in a high-voltage transformer (4).

11. Wind farm according to Claim 10,
**characterized in that**
the high-voltage transformer (4) has two or more primary winding connections (41, 41') to which a respective group (1A, 1B) of the wind energy installations (1) of the wind farm is connected.

12. Wind farm according to one of the preceding claims,
**characterized in that**
the swivel transformer (5) has two or more taps (511) for different swivel angles.

13. Wind farm according to one of the preceding claims,
**characterized in that**
each group (1A, 1B) is connected to a separate line (21A, 21B).

14. Wind farm according to one of the preceding claims,
**characterized in that**
two different swivel transformers (5), each having opposed swivel angles of equal magnitude, are provided.

15. Method for connecting wind energy installations (1), which each have a rotor (12) and a generator (13), driven thereby, for generating electric power, to a busbar system (2) via turbine transformers (20), having the steps of
- identification of a critical harmonic,
- splitting of the wind energy installations (1) into groups (1A, 1B),
- determination of a swivel angle for one of the groups (1A) such that the different phases of the groups (1A, 1B) result in specific compensation for the critical harmonic between the groups (1A, 1B), and
- production of the swivel angle in the group (1A),
wherein the wind energy installations (1) are connected or disconnected with different swivel angles or the number of groups is changed in order to achieve the desired swivel angle.

16. Method according to Claim 15,
**characterized by**
determination of the swivel angle on the basis of the number of groups (1A, 1B).

17. Method according to Claim 15 or 16,
**characterized by**
performance of the calculation for individual swivel angles for a plurality of critical harmonics and of an optimization calculation for determining the swivel angle.

18. Method according to one of Claims 15 to 17,
**characterized by**
determination of the number of groups (1A, 1B) to be formed on the basis of the determined swivel angle, failures in the individual wind energy installations (1) and/or utilization level of the individual wind energy installations (1).

## Revendications

1. Parc éolien comportant plusieurs éoliennes (1), qui comportent chacune un rotor (12), un générateur (13) actionné par celui-ci et destiné à produire de l'énergie électrique, et une liaison électrique, par laquelle l'énergie électrique produite par les éoliennes (1) est acheminée vers un point de raccordement au réseau (9) et laquelle comporte un réseau collectif (2) auquel les éoliennes (1) sont raccordées par l'intermédiaire de transformateurs à turbine (20), un premier groupe (1A) d'éoliennes (1) présentant une phase pivotée par rapport à au moins un autre groupe (1B),
**caractérisé en ce que**
la liaison électrique pour le premier groupe (1A) comporte au moins un transformateur pivotant (5) séparé, qui induit la phase pivotée par rapport à l'autre groupe (1B) selon un angle de pivotement souhaité, et les éoliennes (1) sont réparties en groupes (1A, 1B) et le transformateur pivotant (5) séparé est configuré, de telle sorte que la phase pivotée du premier groupe (1A) est compensatrice par rapport à une harmonique critique prédéfinissable, un module de pivotement (35) étant configuré pour connecter et déconnecter les éoliennes (1) avec un angle de pivotement différent ou pour modifier le nombre de groupes afin d'obtenir l'angle de pivotement souhaité.

2. Parc éolien selon la revendication 1, **caractérisé en ce qu'**il est prévu un dispositif de réglage pour l'angle de pivotement souhaité.

3. Parc éolien selon la revendication 1 ou 2, **caractérisé en ce qu'**il est prévu un module de compensation d'harmonique (37) qui est configuré pour déterminer l'angle de pivotement en fonction de l'ordre de l'harmonique critique.

4. Parc éolien selon la revendication 3, **caractérisé en ce que** le module de compensation d'harmonique (37) est configuré en outre pour effectuer un calcul d'optimisation en présence de plusieurs harmoniques critiques.

5. Parc éolien selon la revendication 3 ou 4, **caractérisé en ce que** le module de pivotement et le module de compensation d'harmonique (37) coopèrent de telle sorte que le nombre de groupes (1A, 1B) à former est déterminé en fonction de l'angle de pivotement déterminé, des défaillances des différentes éoliennes (1) et/ou de la charge des différentes éoliennes (1).

6. Parc éolien selon l'une quelconque des revendications précédentes, **caractérisé en ce que** le transformateur pivotant (5) est réalisé sous la forme d'un autotransformateur.

7. Parc éolien selon l'une quelconque des revendications précédentes, **caractérisé en ce que** le transformateur pivotant (5) est intégré dans l'éolienne (1) concernée.

8. Parc éolien selon la revendication 7, **caractérisé en ce que** le transformateur pivotant (5) est intégré dans le convertisseur (14) de l'éolienne (1) concernée.

9. Parc éolien selon l'une quelconque des revendications précédentes, **caractérisé en ce que** le transformateur pivotant (5') est disposé en tant que propre unité dans le réseau collectif (2) du parc éolien.

10. Parc éolien selon l'une quelconque des revendications précédentes, **caractérisé en ce que** le transformateur pivotant (5") est intégré dans un transformateur haute tension (4).

11. Parc éolien selon la revendication 10, **caractérisé en ce que** le transformateur haute tension (4) comporte deux ou plusieurs raccords d'enroulement primaire (41, 41'), auxquels est raccordé un groupe (1A, 1B) des éoliennes (1) du parc éolien.

12. Parc éolien selon l'une quelconque des revendications précédentes, **caractérisé en ce que** le transformateur pivotant (5) comporte deux ou plusieurs dérivations (511) pour différents angles de pivotement.

13. Parc éolien selon l'une quelconque des revendications précédentes, **caractérisé en ce que** chaque groupe (1A, 1B) est raccordé à sa propre ligne (21A, 21B).

14. Parc éolien selon l'une quelconque des revendications précédentes, **caractérisé en ce que** deux transformateurs pivotants (5) différents sont prévus chacun avec des angles de pivotement opposés, de même grandeur.

15. Procédé permettant de raccorder des éoliennes (1) à un réseau collectif (2) par l'intermédiaire de transformateurs à turbine (20), lesquelles comportent chacune un rotor (12), un générateur (13) actionné par celui-ci et destiné à produire de l'énergie électrique, comportant les étapes:
- identification d'une harmonique critique,
- répartition des éoliennes (1) en groupes (1A, 1B),
- détermination d'un angle de pivotement pour l'un des groupes (1A), de telle sorte que les différentes phases des groupes (1A, 1B) permettent d'obtenir une compensation ciblée de l'harmonique critique entre les groupes (1A, 1B), et
- génération de l'angle de pivotement dans le groupe (1A),
les éoliennes (1) étant connectées ou déconnectées avec des angles de pivotement différents ou le nombre de groupes étant modifié afin d'obtenir l'angle de pivotement souhaité.

16. Procédé selon la revendication 15, **caractérisé par** la détermination de l'angle de pivotement en fonction du nombre de groupes (1A, 1B).

17. Procédé selon la revendication 15 ou 16, **caractérisé par** la mise en oeuvre du calcul pour des angles de pivotement individuels en présence de plusieurs harmoniques critiques et d'un calcul d'optimisation pour déterminer l'angle de pivotement.

18. Procédé selon l'une quelconque des revendications 15 à 17, **caractérisé par** la détermination du nombre de groupes (1A, 1B) à former en fonction de l'angle de pivotement déterminé, des défaillances des différentes éoliennes (1) et/ou de la charge des différentes éoliennes (1)
